# EUROPEAN PATENT SPECIFICATION

(11) **EP 3 355 598 B1**
(45) Date of publication and mention of the grant of the patent: **10.03.2021**
(21) Application number: 16848392.3
(22) Date of filing: 27.07.2016
(51) Int. Cl.: H04W 8/00, H04W 72/04, H04W 92/18, H04W 76/14

(54) **WIRELESS TERMINAL AND BASE STATION**
DRAHTLOSES ENDGERÄT UND BASISSTATION
TERMINAL SANS FIL ET STATION DE BASE

(30) Priority: 24.09.2015 US 201562222902 P
(43) Date of publication of application: 01.08.2018
(73) Proprietor: Kyocera Corporation, Kyoto-shi, Kyoto 612-8501 (JP)
(72) Inventor: FUJISHIRO, Masato, Kyoto-shi Kyoto 612-8501 (JP)
(74) Representative: SSM Sandmair
(86) International application number: PCT/JP2016/072062
(87) International publication number: WO 2017/051602

(56) References cited:
- WO-A1-2015/053382
- ERICSSON: "On D2D gaps", 3GPP DRAFT; R2-153595 - ON D2D GAPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, P.R. China; 20150824 - 20150828 14 August 2015 (2015-08-14), XP050993905, Retrieved from the Internet: URL:http://www.3gpp.org/ftp/tsg_ran/WG2_RL 2/TSGR2_91/Docs/ [retrieved on 2015-08-14]
- KYOCERA: "Additional gaps for D2D discovery", 3GPP DRAFT; R2-144968_DISCOVERY-MONTOR-GAP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20141117 - 20141121 17 November 2014 (2014-11-17), XP050877107, Retrieved from the Internet: URL:http://www.3gpp.org/ftp/Meetings_3GPP_ SYNC/RAN2/Docs/ [retrieved on 2014-11-17]
- HUAWEI ET AL: "Discovery transmission on inter-carriers of intra-PLMN and inter- PLMN", 3GPP DRAFT; R2-153242 DISCOVERY TRANSMISSION ON INTER-CARRIERS OF INTRA-PLMN AND INTER-PLMN, 3RD GENERATION PARTNERSHIP PROJECT (3GPP), MOBILE COMPETENCE CENTRE ; 650, ROUTE DES LUCIOLES ; F-06921 SOP , vol. RAN WG2, no. Beijing, China; 20150824 - 20150828 23 August 2015 (2015-08-23), XP051003999, Retrieved from the Internet: URL:http://www.3gpp.org/ftp/Meetings_3GPP_ SYNC/RAN2/Docs/ [retrieved on 2015-08-23]
- KYOCERA: "Further details of sidelink gap for direct discovery", 3GPP DRAFT; R2-154680_DISCOVERY-GAP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 4 October 2015 (2015-10-04), XP051005186, Retrieved from the Internet: URL:http://www.3gpp.org/ftp/Meetings_3GPP_ SYNC/RAN2/Docs/ [retrieved on 2015-10-04]
- ERICSSON: 'On D2D gaps' 3GPP TSG-RAN WG2#91 R2-153595, [Online] 14 August 2015, XP050993905 Retrieved from the Internet: <URL:http://www.3gpp. org/ftp/tsg_ran/WG2_RL2/TSGR2_91/Docs/R2-15 3595. zip>
- KYOCERA: 'Additional gaps tor D2D discovery' 3GPP TSG-RAN WG2#88 R2-144968, [Online] November 2014, XP050877107 Retrieved from the Internet: <URL:http://www.3gpp.org/ftp/tsg_ran/ WG2_RL2/TSGR2_88/Docs/R2-144968.zip>
- KYOCERA: 'Enhanced ProSe discovery for inter- PLMN' 3GPP TSG-RAN WG2#90 R2-152642, [Online] May 2015, XP050972406 Retrieved from the Internet: <URL:http://www.3gpp.org/ftp/tsg_ran/ WG2_RL2/TSGR2_90/Docs/R2-152642.zip>

## Description

### TECHNICAL FIELD

The present application relates to a radio terminal and a base station used in a communication system.

### BACKGROUND ART

In 3GPP (3rd Generation Partnership Project), which is a project aiming to standardize a mobile communication system, the specifications of a proximity based service (ProSe) have been designed.

In the ProSe, a direct discovery (ProSe Direct Discovery) and direct communication (ProSe Direct Communication) are defined.

The direct discovery is an operation for discovering another radio terminal present in the proximity of a radio terminal. The direct communication is an operation for communicating on a direct device-to-device interface. The direct discovery and the direct communication configure a sidelink (sidelink operation).

### PRIOR ART DOCUMENT

### NON-PATENT DOCUMENT

Non Patent Document 1: 3GPP Technical Specification "TS 36.300 V13.0.0" July 8, 2015

"On D2D gaps" (ERICSSON, vol. RAN WG2, no. Beijing, P.R. China; 20150824 - 20150828, (20150814), 3GPP DRAFT; R2-153595 - ON D2D GAPS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE) discloses that the UE sends to the eNB a ProSe gap request indicating the desired gap configuration (gap length, gap periodicity, RX/TX subframes, synchronization offset, discovery carrier) for one or more of the following discovery periods (cf. Proposal 3).

"Additional gaps for D2D discovery" (KYOCERA, vol. RAN WG2, no. San Francisco, USA; 20141117 - 20141121, (20141117), 3GPP DRAFT; R2-144968_DISCOVERY-MONTOR-GAP, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE) discloses that if the serving cell were able obtain detailed ProSe discovery information through OAM, it isn't necessary for the UE to provide such information to the serving cell ad that if the serving cell already obtained such information from a UE it won't be necessary for other UEs to provide the same information, as long as the information has the same contents (cf. section "3.1 Working assumption"). This document further discloses that the serving cell should indicate in SIB or dedicated signalling whether the UE should provide the detailed ProSe information from inter-frequency neighbour cells (cf. section "3.1 Working assumption").

"Discovery transmission on inter-carriers of intra-PLMN and inter- PLMN" (HUAWEI ET AL, vol. RAN WG2, no. Beijing, China; 20150824 - 20150828, (20150823), 3GPP DRAFT; R2-153242 DISCOVERY TRANSMISSION ON INTER-CARRIERS OF INTRA-PLMN AND INTER-PLMN, 3RD GENERATION PARTNERSHIP PROJECT (3GPP), MOBILE COMPETENCE CENTRE; 650, ROUTE DES LUCIOLES; F-06921 SOP) relates to ProSe discovery transmission on inter-carrier and inter-PLMN (cf. section "1 Introduction").

### SUMMARY

The present invention is defined by the independent claims. Further embodiments of the present invention are described in the dependent claims.

### BRIEF DESCRIPTION OF THE DRAWINGS

Fig. 1 is a diagram illustrating a configuration of an LTE system.
Fig. 2 is a protocol stack diagram of a radio interface in the LTE system.
Fig. 3 is a configuration diagram of a radio frame used in the LTE system.
Fig. 4 is a block diagram of a UE 100.
Fig. 5 is a block diagram of an eNB 200.
Fig. 6 is a sequence chart for describing an operation according to a first embodiment.
Fig. 7 is a sequence chart for describing an operation according to a second embodiment.
Fig. 8 is a sequence chart for describing an operation according to a third embodiment.
Fig. 9 is a sequence chart for describing an operation according to a fourth embodiment.
Fig. 10 is a diagram for describing a sidelink gap of an option 2 from a perspective of transmission.
Fig. 11 is a diagram for describing a single sidelink gap configuration.

### DESCRIPTION OF THE EMBODIMENT

### [Overview of embodiments]

A problem may occur when the wireless terminal performs the side link operation at a frequency to which a neighboring cell different from the serving cell belongs.

It should be noted that the "sidelink operation" may be replaced with "direct discovery" or may be replaced with "direct communication".

### (Mobile communication system)

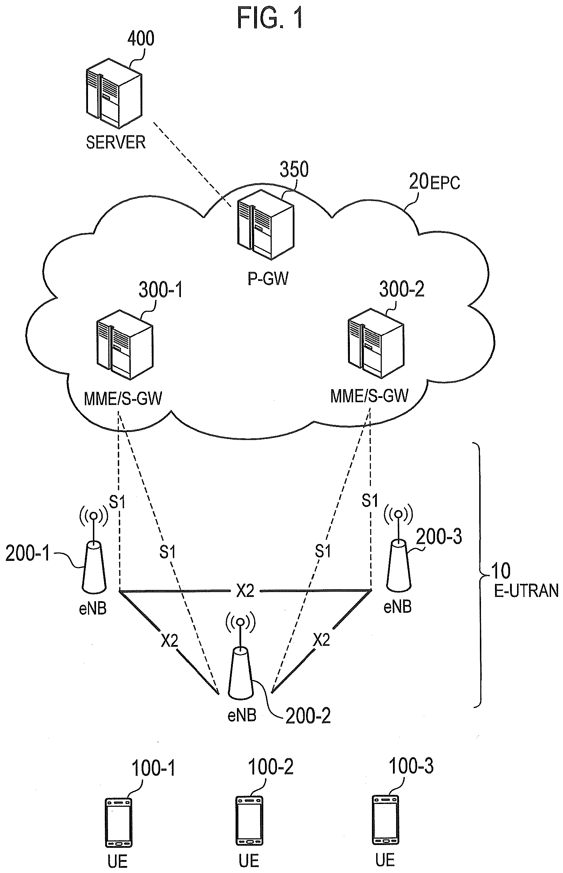

Hereinafter, an LTE system which is a mobile communication system according to the embodiment will be described. Fig. 1 is a diagram showing a configuration of an LTE system.

As illustrated in Fig. 1, the LTE system includes a plurality of UEs (User Equipments) 100, E-UTRAN (Evolved-UMTS Terrestrial Radio Access Network) 10, and EPC (Evolved Packet Core) 20. Also, a server 400 is provided in an external network that is not managed by an operator of the cellular network.

The UE 100 corresponds to a radio terminal. The UE 100 is a mobile communication device and performs radio communication with a cell (a serving cell). Configuration of the UE 100 will be described later.

The E-UTRAN 10 corresponds to a radio access network. The E-UTRAN 10 includes a plurality of eNBs (evolved Node-Bs) 200. The eNB 200 corresponds to a base station. The eNBs200 are connected mutually via an X2 interface. Configuration of the eNB200 will be described later.

The eNB 200 manages one or a plurality of cells and performs radio communication with the UE 100 which establishes a connection with the cell of the eNB 200. The eNB 200 has a radio resource management (RRM) function, a routing function for user data (hereinafter simply referred as "data"), and a measurement control function for mobility control and scheduling, and the like. It is noted that the "cell" is used as a term indicating a minimum unit of a radio communication area, and is also used as a term indicating a function of performing radio communication with the UE 100.

The EPC 20 corresponds to a core network. The EPC 20 includes a plurality of MME (Mobility Management Entity)/S-GWs (Serving-Gateways) 300 and a P-GW (Packet Data Network Gateway) 350. The MME performs various mobility controls and the like for the UE 100. The S-GW performs control to transfer data. MME/S-GW 300 is connected to eNB 200 via an S1 interface. The E-UTRAN 10 and the EPC 20 constitute a network. The P-GW 350 performs control to relay the user data from the external network (and to the external network).

The Server 400 is, for example, a ProSe application server (ProSe Application Server). In this case, the Server 400 manages identifiers used in ProSe. For example, the Server 400 stores "EPC ProSe user ID" and "ProSe function ID". Further, the Server 400 maps "application layer user ID" and "EPC ProSe user ID".

Further, the Server 400 may have the ProSe function. The ProSe function is a logical function used for network related operation required for ProSe. The ProSe function plays a different role for each feature of ProSe. The Server 400 may be a network device having only the ProSe function.

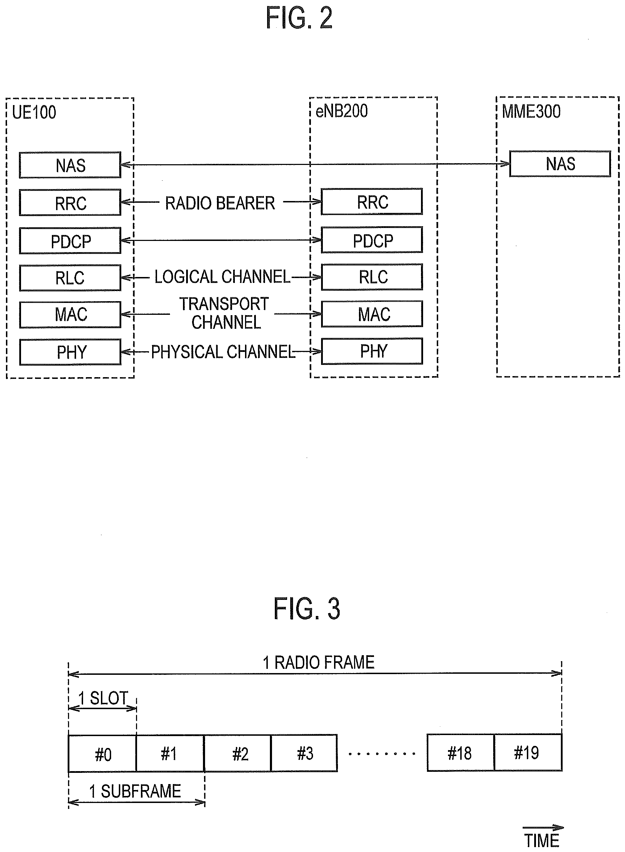

Fig. 2 is a protocol stack diagram of a radio interface in the LTE system. As illustrated in Fig. 2, the radio interface protocol is classified into a layer 1 to a layer 3 of an OSI reference model, wherein the layer 1 is a physical (PHY) layer. The layer 2 includes a MAC (Medium Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data and control signal are transmitted via the physical channel.

The MAC layer performs priority control of data, a retransmission process by hybrid ARQ (HARQ), and a random access procedure and the like. Between the MAC layer of the UE 100 and the MAC layer of the eNB 200, data and control signal are transmitted via a transport channel. The MAC layer of the eNB 200 includes a scheduler that determines a transport format of an uplink and a downlink (a transport block size and a modulation and coding scheme (MCS)) and a resource block to be assigned to the UE 100.

The RLC layer transmits data to an RLC layer of a reception side by using the functions of the MAC layer and the PHY layer. Between the RLC layer of the UE 100 and the RLC layer of the eNB 200, data and control signal are transmitted via a logical channel.

The PDCP layer performs header compression and decompression, and encryption and decryption.

The RRC layer is defined only in a control plane dealing with control signal. Between the RRC layer of the UE 100 and the RRC layer of the eNB 200, message (RRC messages) for various types of configuration are transmitted. The RRC layer controls the logical channel, the transport channel, and the physical channel in response to establishment, re-establishment, and release of a radio bearer. When there is a connection (RRC connection) between the RRC of the UE 100 and the RRC of the eNB 200, the UE 100 is in an RRC connected state (connected state), otherwise the UE 100 is in an RRC idle state (idle state).

A NAS (Non-Access Stratum) layer positioned above the RRC layer performs a session management, a mobility management and the like.

FIG. 3 is a configuration diagram of a radio frame used in the LTE system. In the LTE system, OFDMA (Orthogonal Frequency Division Multiple Access) is applied to a downlink, and SC-FDMA (Single Carrier Frequency Division Multiple Access) is applied to an uplink, respectively.

As illustrated in FIG. 3, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction (not shown), and a plurality of symbols in the time direction. Each resource block includes a plurality of subcarriers in the frequency direction. One symbol and one subcarrier forms one resource element. Of the radio resources (time and frequency resources) assigned to the UE 100, a frequency resource can be identified by a resource block and a time resource can be identified by a subframe (or a slot).

In the downlink, an interval of several symbols at the head of each subframe is a control region used as a physical downlink control channel (PDCCH) for mainly transmitting a control signal. The details of the PDCCH will be described later. Furthermore, the other portion of each subframe is a region available as a physical downlink shared channel (PDSCH) for mainly transmitting downlink data.

In the uplink, both ends in the frequency direction of each subframe are control regions used as a physical uplink control channel (PUCCH) for mainly transmitting an uplink control signal. Furthermore, the other portion of each subframe is a region available as a physical uplink shared channel (PUSCH) for mainly transmitting uplink data.

### (Proximity service)

Proximity-based Services (ProSes) will be described below. In the ProSe, a plurality of UEs 100 transmit and receive various types of signals via a direct radio link without passing through the eNB 200. The direct radio link in the ProSe is called "Sidelink".

The "Sidelink" is a UE-to-UE interface for direct discovery and direct communication. The "Sidelink" corresponds to a PC5 interface. The PC5 is a reference point between UEs capable of utilizing the proximity service, the reference point being used for a control and user plane for UE-to-Network relay based on direct discovery, direct communication, and proximity service. The PC5 interface is a UE-to-UE interface in the ProSe.

Two modes, namely, "Direct Discovery" and "Direct Communication", are defined for modes of the ProSe.

The Direct Discovery is a mode of searching a partner destination by directly transmitting, between UEs, a discovery signal that does not specify a specific destination. Further, the Direct Discovery is a procedure for discovering another UE in the proximity of a UE by using a direct radio signal in E-UTRA (Evolved Universal Terrestrial Radio Access) via the PC5. Alternatively, the Direct Discovery is a procedure adopted by a UE 100 capable of executing the proximity service for discovering another UE 100 capable of executing the proximity service by using only the capability of the two UEs 100 with the help of the E-UTRA technology. The Direct Discovery is supported only if a service is provided to the UE 100 by the E-UTRAN (eNB 200 (cell)). The service can be provided by the E-UTRAN if the UE 100 is either connected to the cell (eNB 200), or exists in the cell.

The resource allocation types for the transmission (announcement) of a discovery signal (discovery message) have "Type 1" in which the UE 100 selects a radio resource, and "Type 2 (Type 2B)" in which the eNB 200 allocates the radio resource.

A "Sidelink Direct Discovery" protocol stack includes a physical (PHY) layer, a MAC layer, and a ProSe protocol. Between the physical layer of a UE (A) and the physical layer of a UE (B), a discovery signal is transmitted via a physical channel called a physical sidelink discovery channel (PSDCH). Between the MAC layer of the UE (A) and the MAC layer of the UE (B), a discovery signal is transmitted via a transport channel called a sidelink discovery channel (SL-DCH).

The Direct Communication is a mode in which data is directly transmitted between the UEs by specifying a specific destination (destination group). Further, the Direct Communication is communication between two or more UEs capable of executing the proximity service through user plane transmission in which the E-UTRA technology is used via a path without passing through any network node.

The resource allocation types of the Direct Communication have "Mode 1" in which the eNB 200 specifies a radio resource of the Direct Communication, and "Mode 2" in which the UE 100 selects a radio resource of the Direct Communication.

A Direct Communication protocol stack includes a physical (PHY) layer, a MAC layer, an RLC layer, and a PDCP layer. Between the physical layer of a UE (A) and the physical layer of a UE (B), a control signal is transmitted via a physical sidelink control channel (PSCCH), and data is transmitted via a physical sidelink shared channel (PSSCH). Further, a synchronization signal and the like may be transmitted via a physical sidelink broadcast channel (PSBCH). Between the MAC layer of the UE (A) and the MAC layer of the UE (B), data is transmitted via a transport channel called a sidelink shared channel (SL-SCH). Between the RLC layer of the UE (A) and the RLC layer of the UE (B), data is transmitted via a logical channel called a sidelink traffic channel (STCH).

### (Radio terminal)

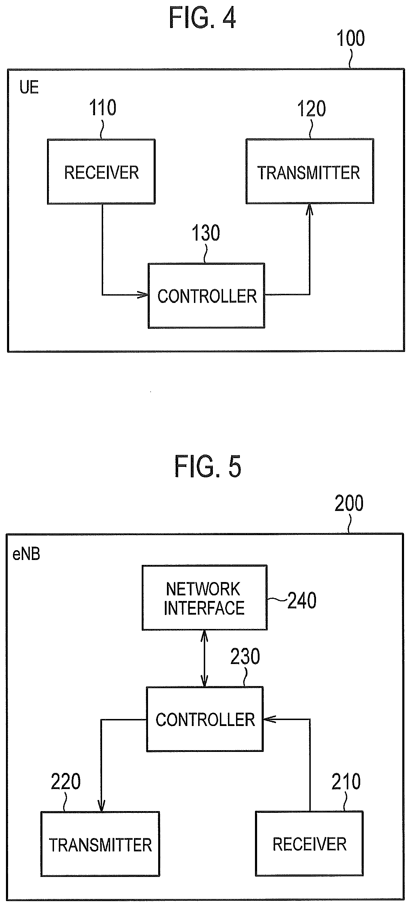

The UE 100 (radio terminal) according to the embodiment will be described below. Fig. 4 is a block diagram of the UE 100. As illustrated in Fig. 4, the UE 100 includes a receiver 110, a transmitter 120, and a controller 130. The receiver 110 and the transmitter 120 may be unified as one in the form of a transceiver.

The receiver 110 performs various types of receptions under the control of the controller 130. The receiver 110 includes an antenna. The receiver 110 converts a radio signal received by the antenna into a baseband signal (reception signal), and outputs the baseband signal to the controller 130.

It is noted that when the UE 100 is a "ProSe-enabled Public Safety UE", the receiver 110 can simultaneously receive radio signals in two different frequencies. For example, the UE 100 has two receivers 110 (2 RX Chains). The UE 100 can receive a cellular radio signal by one receiver 110, and receive a ProSe radio signal by the other receiver 110.

The transmitter 120 performs various types of transmissions under the control of the controller 130. The transmitter 120 includes an antenna. The transmitter 120 converts a baseband signal (transmission signal) output from the controller 130 into a radio signal, and transmits the radio signal from the antenna.

The controller 130 performs various types of controls in the UE 100. The controller 130 includes a processor and a memory. The memory stores a program to be executed by the processor, and information to be used for a process by the processor. The processor includes a baseband processor that performs modulation and demodulation, coding and decoding and the like on a baseband signal, and a CPU (Central Processing Unit) that executes the program stored in the memory to perform various types of processes. The processor may include a codec that performs coding and decoding on sound and video signals. The processor executes various types of processes described later, and various types of communication protocols described above.

The UE 100 may include a GNSS receiving equipment. The GNSS receiving equipment receives a GNSS signal in order to obtain location information indicating a geographical location of the UE 100, and outputs the received signal to the controller 130. Alternatively, the UE 100 may have a GPS function for acquiring the location information of the UE 100.

It is noted that a below-described process (operation) executed by the UE 100 is executed by at least any one of the receiver 110, the transmitter 120, and the controller 130 included in the UE 100; however, for simplicity, it is assumed that the process is executed by the UE 100.

### (Base station)

The eNB 200 (base station) according to the embodiment will be described below. Fig. 5 is a block diagram of the eNB 200. As illustrated in Fig. 5, the eNB 200 includes a receiver 210, a transmitter 220, a controller 230, and a network interface 240. The transmitter 220 and the receiver 210 may be unified as one in the form of a transceiver.

The receiver 210 performs various types of receptions under the control of the controller 230. The receiver 210 includes an antenna. The receiver 210 converts a radio signal received by the antenna into a baseband signal (reception signal), and outputs the baseband signal to the controller 230.

The transmitter 220 performs various types of transmissions under the control of the controller 230. The transmitter 220 includes an antenna. The transmitter 220 converts a baseband signal (transmission signal) output from the controller 230 into a radio signal, and transmits the radio signal from the antenna.

The controller 230 performs various types of controls in the eNB 200. The controller 230 includes a processor and a memory. The memory stores a program to be executed by the processor, and information to be used for a process by the processor. The processor includes a baseband processor that performs modulation and demodulation, coding and decoding and the like on a baseband signal, and a CPU (Central Processing Unit) that executes the program stored in the memory to perform various types of processes. The processor executes various types of processes described later, and various types of communication protocols described above.

The network interface 240 is connected to an adjacent eNB 200 via the X2 interface and is connected to the MME/S-GW 300 via the S1 interface. The network interface 240 is used in communication performed on the X2 interface, communication performed on the S1 interface, and the like.

It is noted that the below-described process (operation) executed by the eNB 200 is executed by at least any one of the transmitter 220, the receiver 210, the controller 230, and the network interface 240 included in the eNB 200; however, for simplicity, it is assumed that the process is executed by the eNB 200.

In the following, first to fourth embodiments are described. The second embodiment falls within the scope of the independent claims. The first, third and fourth embodiments do not fall within the scope of the independent claims, but are useful for understanding the present invention.

### [First Embodiment]

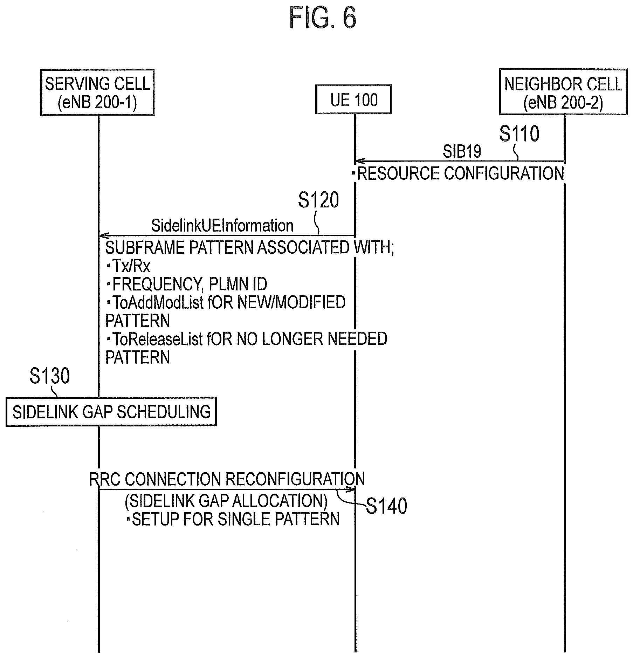

Next, an operation according to a first embodiment will be described by using Fig. 6. Fig. 6 is a sequence chart for describing an operation according to the first embodiment.

In Fig. 6, the UE 100 exists in a cell (serving cell) managed by an eNB 200-1. In the serving cell, the UE 100 is in an idle state or a connected state. Further, the UE 100 exists in a cell (neighbor cell) managed by an eNB 200-2. It is noted that if existing in the cell, the UE 100 is in a state capable of receiving a radio signal from the cell (eNB).

The eNB 200-1 operates the serving cell at a first frequency. Therefore, the serving cell belongs to the first frequency. The eNB 200-2 may operate the cell (neighbor cell) at the first frequency (Intra-frequency), and may operate the cell at a second frequency (Intra-frequency) different from the first frequency. Further, the eNB 200-1 and the eNB 200-2 may belong to the same PLMN (Intra-PLMN), and may belong to a different PLMN (Inter-PLMN). It is noted that in the following description, where necessary, an operation of the eNB 200 may be considered as an operation of a cell.

As illustrated in Fig. 6, in step S110, the neighbor cell transmits information on a period allowing for execution of the sidelink operation at the second frequency to which the neighbor cell belongs. The information on the period is information (hereinafter, referred to as resource configuration) with which it is possible to specify the period. For example, the neighbor cell transmits the resource configuration by broadcast (for example, SIB (System Information Block) 19). The neighbor cell may transmit the resource configuration by unicast (dedicated signaling) to a subordinate UE. The UE subordinate to the neighbor cell can execute the sidelink operation at the second frequency, based on the resource configuration.

The resource configuration is information on a resource pool for executing the sidelink operation at the second frequency, for example. The resource configuration may include the information on a resource pool for executing the sidelink operation at a frequency different from the second frequency. The resource pool includes at least one of a region in which a radio resource for transmitting a radio signal by the sidelink operation is arranged (transmission resource pool), and a region in which a radio resource for receiving a radio signal by the sidelink operation is arranged (reception resource pool). Further, the resource pool is at least one of a resource pool for the Direct Discovery and a resource pool for the Direct Communication.

The UE 100 receives the resource configuration from the neighbor cell, without changing the serving cell. For example, if the UE 100 includes a plurality of receivers 110, the UE 100 can receive the resource configuration from the neighbor cell by using one receiver 110 and can receive the radio signal from the serving cell by using another receiver 110. The UE 100 may receive the resource configuration from the neighbor cell if executing a mode (DRX) of intermittently receiving the radio signal from the serving cell.

In step S120, the UE 100 transmits a message for requesting a sidelink gap to the serving cell (eNB 200-1). The UE 100 can request the sidelink gap by a sidelink UE information message (SidelinkUEInformation), for example.

The sidelink gap is a gap (period) for executing the sidelink operation at a frequency (Intra-frequency and/or Inter-frequency) to which a neighbor cell different from the serving cell belongs. The sidelink gap may be a period during which the communication with the serving cell (obligation of receiving PDCCH, for example) is exempted. The UE 100 performs the sidelink operation in the sidelink gap if receiving a configuration of the sidelink gap from the serving cell. It is noted that the sidelink operation is an operation in which a direct device-to-device interface (PC5) is used, and the UE 100 can perform one of the operations, that is, the Direct Discovery and the Direct Communication as the sidelink operation.

The message for requesting the sidelink gap may include information on a predetermined period during which the sidelink operation can be executed at a predetermined frequency (Intra-frequency and/or Inter-frequency).

The information on the predetermined period is configured so that a transmission period in which transmission (announcement) of the radio signal by the sidelink operation is executable and a reception period in which reception (monitor) of the radio signal by the sidelink operation is executable can be identified. For example, with the information on the predetermined period, the transmission period and the reception period are distinguished by identification information (Tx/Rx) indicating whether the predetermined period is the transmission period or the reception period. Specifically, information on a subframe indicating the predetermined period (for example, a subframe pattern) is associated with one of an identifier (Tx) indicating transmission and an identifier (Rx) indicating reception. Further, the predetermined period (for example, the subframe pattern) may be associated with a frequency, or may be associated with a PLMN (PLMN ID). Further, the predetermined period may be associated with a cell identifier (Cell ID).

The information on the predetermined period may be in a list form. For example, the list may be configured as "{pattern, frequency (option), PLMN ID (option), Cell ID (option), Tx/Rx}". Further, the information on the predetermined period may be configured by at least one of a list of transmission periods (TX subframe list) and a list of reception periods (RX subframe list). For example, the transmission list may be configured as "{(Tx)pattern, frequency (option), PLMN ID (option), Cell ID (option)}", and the reception list may be configured as "{(Rx)pattern, frequency (option), PLMN ID (option), Cell ID (option)}".

The predetermined period may be a period indicated by the resource configuration (whole period of the resource pool or a part thereof). The predetermined period may be a period during which the UE 100 intends transmission and/or reception or may be a period during which the UE 100 is interested in transmission and/or reception, out of the period indicated by the resource configuration. Further, if there is no synchronization between the serving cell and the neighbor cell, the UE 100 may ensure that a timing of the serving cell corresponds to the predetermined period (subframe pattern).

Further, the information on the predetermined period may be information on a predetermined period modified from the information on the predetermined period transmitted last time to the eNB 200-1 before the message is transmitted in step S120. That is, a difference between a predetermined period to be transmitted this time and the predetermined period transmitted last time may be information on the predetermined period. For example, the information on the predetermined period may include a list of (a part of) subframe patterns modified or added from the subframe pattern transmitted last time (ToAddModList for new/modified patttern), and may include a list of unnecessary (a part of) subframe patterns from the subframe pattern transmitted last time (ToReleaseList for no longer needed pattern). The UE 100 does not transmit all the subframe patterns, and thus, it is possible to reduce signaling overhead to the eNB 200-1.

The UE 100 may transmit the message for requesting the sidelink gap if receiving the resource configuration from the neighbor cell, for example. Further, if (the resource configuration is received from the neighbor cell, and) the sidelink gap is needed, the UE 100 may transmit the message for requesting the sidelink gap. That is, if being interested in the sidelink operation (transmission and/or reception) and intending the sidelink operation, the UE 100 may transmit the message. Therefore, the information on the predetermined period includes at least any one of information on subframes arranged with a radio resource for executing the sidelink operation in the neighbor cell, information on a subframe in which the UE 100 intends the sidelink operation, out of the subframes arranged with the radio resource, and information on a subframe in which the UE 100 is interested in the sidelink operation, out of the subframes arranged with the radio resource. It is noted that the information on the subframe may be (a bitmap of) the subframe pattern and information on a subframe indicating a start/end. The information on the subframe may include information indicating the number of times of repetitions of the subframe pattern. Information on the subframe may include information on an offset value.

Further, in the message for requesting the sidelink gap, identification information (a Gap Request identifier) indicating a request for the sidelink gap may be included. The eNB 200-1 can determine that the sidelink UE information message received from the UE 100 requests the sidelink gap, for example. The eNB 200-1 may determine that the message requests the sidelink gap if the predetermined information is included in the message. It is noted that the eNB 200-1 may determine that the message requests the sidelink gap if information on a frequency, instead of the information on the predetermined period, is included in the message, as described later.

Thus, the information on the predetermined period included in the message for requesting the sidelink gap (for example, the subframe pattern) can be transmitted separately depending on the information on the predetermined period for transmission and the information on the predetermined period for reception.

In step S130, the eNB 200-1 can execute scheduling of the sidelink gap (Sidelink Gap scheduling), based on the information on the predetermined period.

For example, the eNB 200-1 can perform scheduling on the subframe pattern notified from the UE 100, directly as the sidelink gap (sidelink gap pattern). Further, the eNB 200-1 may generate the subframe pattern that can satisfy QoS of cellular communication (Uu communication), based on the subframe pattern notified from the UE 100. The eNB 200-1 can perform scheduling as a generated sidelink gap. The eNB 200-1 may not configure the sidelink gap to the UE 100. The eNB 200-1 expects the UE 100 to perform an operation of prioritizing the cellular communication. In this case, the eNB 200-1 omits a process in step S140.

In step 140, the eNB 200-1 configures the scheduled sidelink gap for the UE 100. For example, the eNB 200-1 transmits, to the UE 100, allocation information of the sidelink gap (Sidelink Gap allocation), by an RRC connection reconfiguration message.

The allocation information of the sidelink gap may include information on a subframe including one subframe pattern (Setup for single pattern), and may include information on a subframe having the same configuration as above, for example.

The UE 100 executes the sidelink operation, based on the allocation information of the sidelink gap. For example, the UE 100 executes, during the sidelink gap, transmission (or reception) of the Direct Discovery at the second frequency. As a result, the UE 100 can execute the sidelink operation without changing the serving cell.

Thus, the message for requesting the sidelink gap includes the information on the predetermined period. The information on the predetermined period is configured so that a transmission period in which transmission (announcement) of the radio signal by the sidelink operation is executable and a reception period in which reception (monitor) of the radio signal by the sidelink operation is executable can be identified. As a result, the eNB 200-1, which can determine the operation (transmission or reception) desired by the UE 100, can appropriately configure the sidelink gap.

For example, the eNB 200-1 can configure the sidelink gap in consideration of a balance between the sidelink gap for transmission of the Direct Discovery and the sidelink gap for reception of the Direct Discovery. For example, if there are many requests for the sidelink gap for transmission of the Direct Discovery, the eNB 200-1 can permit the request for some sidelink gaps only, out of the requests for a plurality of sidelink gaps. This makes it possible to limit the number of UEs that announce a discovery message at a frequency to which the neighbor cell belongs, and thus, it is possible to restrain interference to one another. As a result, it is possible to secure a transmission quality and a reception quality (quality of the discovery message in the UE configured to monitor the discovery message in the neighbor cell) of the discovery message.

Further, a part of the period of the reception resource pool in the neighbor cell is generally a period of the transmission resource pool in the neighbor cell. Thus, the eNB 200-1 that has received the request for the sidelink gap from the UE 100 may configure, for the UE 100, as the sidelink gap, a period not overlapping the period of the transmission resource pool, of the period of the reception resource pool. If the UE 100 intends to receive (monitor) the discovery message, there is no particular problem; however, if the UE 100 intends to transmit (announce) the discovery message, the UE 100 cannot transmit the discovery message during the sidelink gap even if the sidelink gap is configured for the UE 100. Accordingly, the eNB 200-1 can appropriately configure the sidelink gap by determining the sidelink operation (transmission/reception) desired by the UE 100.

Further, if a part of the period of the reception resource pool in the neighbor cell is the period of the transmission resource pool in the neighbor cell, it is possible to configure the period length so that the sidelink gap for transmission is shorter than the sidelink gap for reception. In this case, to prevent the sidelink operation from affecting the cellular communication, the eNB 200-1 can configure so that the UE 100 intending transmission by the sidelink operation (or being interested in transmission) has a shorter sidelink gap than the UE 100 intending reception (or being interested in reception) by the sidelink operation.

### [Second Embodiment]

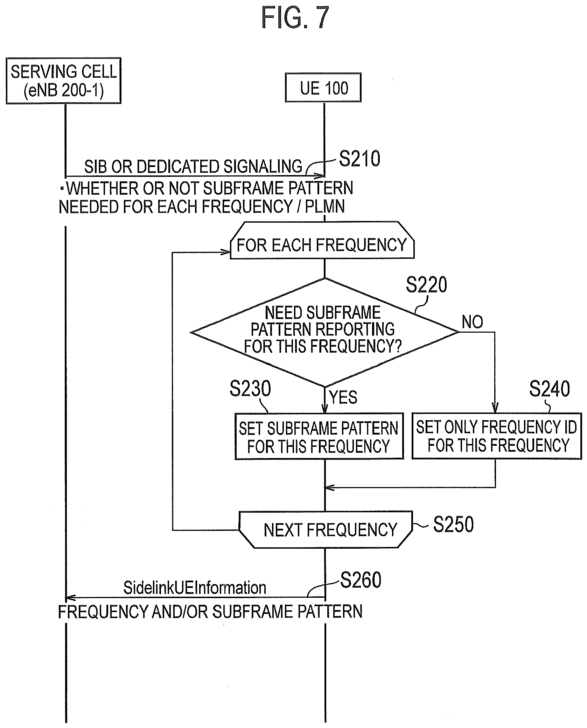

Next, an operation according to a second embodiment will be described by using Fig. 7. Fig. 7 is a sequence chart for describing an operation according to the second embodiment.

In the second embodiment, description will focus on a case where the UE 100 determines whether or not to include the information on the predetermined period into the message. It is noted that description of parts similar to the first embodiment will be omitted where appropriate.

In step S210, the eNB 200-1 transmits, to the UE 100, determination information (for example, Whether or not subframe pattern needed for each frequency/PLMN) for determining whether the UE 100 notifies the eNB 200-1 of the information on the predetermined period (for example, the subframe pattern). The eNB 200-1 transmits, to the UE 100, the determination information by broadcast (for example, SIB) or unicast (for example, dedicated signaling such as an RRC reconfiguration message).

The determination information may be information indicating whether the eNB 200-1 knows the resource configuration in the neighbor cell. If the eNB 200-1 knows the resource configuration, the UE 100 determines to not notify the eNB 200-1 of the information on the predetermined period. If the eNB 200-1 does not know the resource configuration, the UE 100 determines to notify the eNB 200-1 of the information on the predetermined period. It is noted that the eNB 200-1 may know the resource configuration by receiving the resource configuration (predetermined information) from the UE 100, and may acquire the resource configuration via the X2 interface from a neighbor eNB 200-2. The eNB 200-1 may acquire the resource configuration in the neighbor cell (eNB 200-2) from an upper node (for example, OAM).

Further, the determination information may be information indicating whether the information on the predetermined period (subframe pattern) is needed, for example. The determination information may indicate whether the information on the predetermined period is needed for each frequency, and may indicate whether the information is needed for each PLMN (Public Land Mobile Network). The determination information may indicate whether the predetermined information is needed for each cell identifier (cell ID). The determination information may indicate whether the information on the predetermined period is necessary for each of the transmission and the reception, that is, may indicate whether it is necessary that the transmission period and the reception period can be identified.

The UE 100 determines, based on the determination information, whether to include the information on the predetermined period, into the message. Description proceeds with an assumption that the determination information indicates that the information on the predetermined period is needed for each frequency, below.

In step S220, the UE 100 determines whether or not the information on the predetermined period is needed for a predetermined frequency (Need subframe pattern reporting for this frequency?). If the information on the predetermined period is needed, the UE 100 includes the information on the predetermined period corresponding to the frequency into the message (step S230: "Set subframe pattern for this frequency"). On the other hand, if the information on the predetermined period is not needed, the UE 100 includes information on the frequency (for example, an identifier of the frequency (EARFCN), a center frequency, and the like), into the message (step S240: "Set only frequency ID for this frequency"). That is, the UE 100 includes the information on the frequency, instead of the information on the predetermined period, into the message. It is noted that the UE 100 may include a frequency at which the UE does not intend (or is not interested in) the sidelink operation, into the message.

Thus, the UE 100 determines whether to include the information on the predetermined period, into the message.

In step S250, the UE 100 starts a process of step S220 on a next frequency (Next frequency). The UE 100 executes the process of step S220 on all the subject frequencies. It is noted that the subject frequency is a frequency at which the sidelink operation can be executed in the neighbor cell. For example, if the resource configuration from the neighbor cell includes a plurality of frequencies, that is, if there are a plurality of frequencies at which the sidelink operation can be executed, it is determined, for each of the plurality of frequencies, whether to include the information on the predetermined period corresponding to each of the plurality of frequencies into the message.

It is noted that the UE 100 may determine, based on the determination information, whether to include the information on the predetermined period corresponding to each of the plurality of PLMNs, into the message, for each of the plurality of PLMNs. Further, the UE 100 may determine, based on the determination information, whether to include the information on the predetermined period corresponding to each of the transmission and the reception, into the message. Further, the UE 100 may determine, based on the determination information, whether to include or to not include at all the information on the predetermined period. If not including at all the information on the predetermined period, the UE 100 may include the information on the frequency, instead of the information on the predetermined period.

In step S260, the UE 100 transmits, to the eNB 200-1, the message (the sidelink UE information message, for example) including the frequency information (Frequency) and/or the information on the predetermined period (subframe pattern). It is noted that the information on the predetermined period may be information similar to that in the first embodiment.

If receiving the message, the eNB 200-1 can execute the scheduling of the sidelink gap, similarly to step S130.

It is noted that in a case of a message for notifying the resource configuration in the neighbor cell rather than the request for the sidelink gap, the eNB 200-1 may not need to configure the sidelink gap to the UE 100. If the identification information indicating the request for the sidelink gap is not included in the message, for example, the eNB 200-1 determines that the message is for notifying the resource configuration in the neighbor cell.

Further, if the frequency information, rather than the information on the predetermined period, is included, the eNB 200-1 may determine that this frequency is that in which the UE 100 intends (or is interested in) the sidelink operation, and configure the sidelink gap for the UE 100.

Thus, the UE 100 determines, based on the determination information, whether to include the information on the predetermined period, into the message to the eNB 200-1. As a result, if the eNB 200-1 does not require the information on the predetermined period, the UE 100 can eliminate a need of transmitting the information on the predetermined period to the eNB 200-1, and thus, the signaling overhead can be reduced.

### [Third Embodiment]

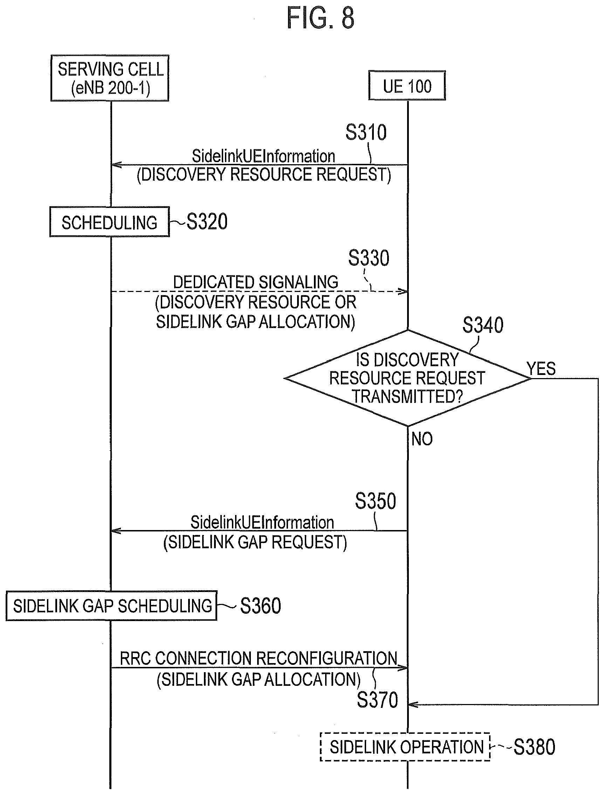

Next, an operation according to a third embodiment will be described by using Fig. 8. Fig. 8 is a sequence chart for describing the operation according to the third embodiment.

In the third embodiment, description proceeds with a focus on a case where the UE 100 omits the transmission of the message for requesting the sidelink gap. It is noted that description of parts similar to either in the first embodiment or the second embodiment will be omitted where appropriate.

In step S310, the UE 100 requests the eNB 200-1 to allocate a radio resource for executing the sidelink operation. The UE 100 requests, by the sidelink UE information message, for example, a radio resource (Discovery resource request) for at least one of the transmission and the reception for the Direct Discovery. The UE 100 may include the information on the frequency in which the UE 100 is interested in (or intends) the sidelink operation, into the message for requesting the radio resource. The UE 100 may include, into the sidelink UE information message, information indicating the first frequency to which the serving cell belongs and the second frequency to which the neighbor cell belongs, for example.

In step S320, the eNB 200-1 performs a scheduling of the radio resource, in response to the reception of the message for requesting the allocation of the radio resource. If allocating the radio resource to the UE 100, the eNB 200-1 executes a process of step S330. If not allocating the radio resource to the UE 100, the eNB 200-1 omits the process of step S330.

Further, if receiving the message for requesting the allocation of the radio resource, the eNB 200-1 may determine to configure the sidelink gap for the UE 100, instead of allocating the radio resource. For example, if the radio resource is not allocated to the UE 100 (for example, the transmission resource to be allocated is not enough), the eNB 200-1 may determine to configure the sidelink gap for the UE 100. Further, if not permitting the sidelink operation in the serving cell but permitting the sidelink operation in the neighbor cell, the eNB 200-1 may determine to configure the sidelink gap for the UE 100. For example, in a case that the UE 100 is interested in the sidelink operation at the first frequency to which the serving cells belong and at the second frequency to which the neighbor cell belongs (or intends the sidelink operation), the eNB 200-1 may determine to configure the sidelink gap for the UE 100. Further, if not permitting the eNB 200-1 to allocate the radio resource to the UE 100 and permitting the UE 100 to autonomously select the radio resource, the eNB 200-1 may determine to configure the sidelink gap for the UE 100.

In step S330, the eNB 200-1 transmits, to the UE 100, a message including a radio resource for the sidelink operation or information on the sidelink gap (Discovery resource or Sidelink Gap allocation).

In step S340, the UE 100 determines whether or not to transmit a message (gap request message) for requesting the sidelink gap for executing the sidelink operation at the frequency to which the neighbor cell belongs (Is Discovery resource request transmitted?).

For example, the UE 100 determines whether or not the message (resource request message) for requesting the radio resource for the sidelink operation (for example, the Direct Discovery) has been transmitted to the eNB 200-1. If transmitting the resource request message, the UE 100 omits the transmission of the gap request message. That is, the UE 100 ends the process and does not transmit the gap request message. On the other hand, if not transmitting the resource request message, the UE 100 executes a process of step S350 to transmit the gap request message.

Alternatively, if the radio resource is allocated in response to the resource request message, the UE 100 may omit the transmission of the gap request message. If the radio resource is not allocated in response to the resource request message, the UE 100 may execute the process of step S350 to transmit the gap request message.

Alternatively, if a dedicated radio resource (Dedicated resource) is allocated by the dedicated signaling, the UE 100 may omit the transmission of the gap request message. If a common radio resource is allocated by broadcast (for example, SIB), the UE 100 may execute the process of step S350 to transmit the gap request message.

Alternatively, even if the radio resource for the sidelink operation is allocated, if the UE 100 intends to execute (or is interested in executing) the sidelink operation at a frequency different from a frequency in which the allocated radio resources are arranged, the UE 100 may execute the process of step S350 to transmit the gap request message. The UE 100 can include, into the gap request message, the information on the frequency at which the UE 100 intends to execute (or is interested in executing) the sidelink operation.

Processes from step S350 to step S370 are similar to those from step S120 to step S140.

In step S380, if receiving the radio resource for the sidelink operation, the UE 100 can execute the sidelink operation by using the radio resource. Further, if the sidelink gap is allocated instead of the allocation of the radio resource despite requesting the radio resource for the sidelink operation, the UE 100 can execute the sidelink operation during the sidelink gap at a frequency to which a neighbor cell different from the serving cell belongs. The UE 100 may determine that the eNB 200-1 does not permit the sidelink operation in the serving cell.

Further, if the sidelink gap is allocated instead of the allocation of the radio resource, the UE 100 may determine that the eNB 200-1 does not permit the radio resource to be allocated to the UE 100. In this case, the UE 100 may autonomously select the radio resource for the sidelink operation and execute the sidelink operation (Sidelink operation) by using the selected radio resource. It is noted that the UE 100 can select a radio resource from a resource pool provided (transmitted/received) by the eNB 200-1.

If the radio resource for the sidelink operation is not allocated and the sidelink gap is not configured despite requesting the radio resource for the sidelink operation, the UE 100 is not permitted by the eNB 200-1, and thus, omits the execution of the sidelink operation (that is, does not execute the sidelink operation). Alternatively, the UE 100 may execute the sidelink operation (for example, reception) so as not to affect the cellular communication.

Thus, if transmitting the resource request message, the UE 100 omits the transmission of the gap request message. As a result, it is possible to reduce the signaling overhead.

Further, if receiving the resource request message from the UE 100, the eNB 200-1 configures the sidelink gap for the UE 100 instead of allocating the radio resource. As a result, the transmission of the gap request message is omitted, and thus, it is possible to reduce the signaling overhead.

### [Fourth Embodiment]

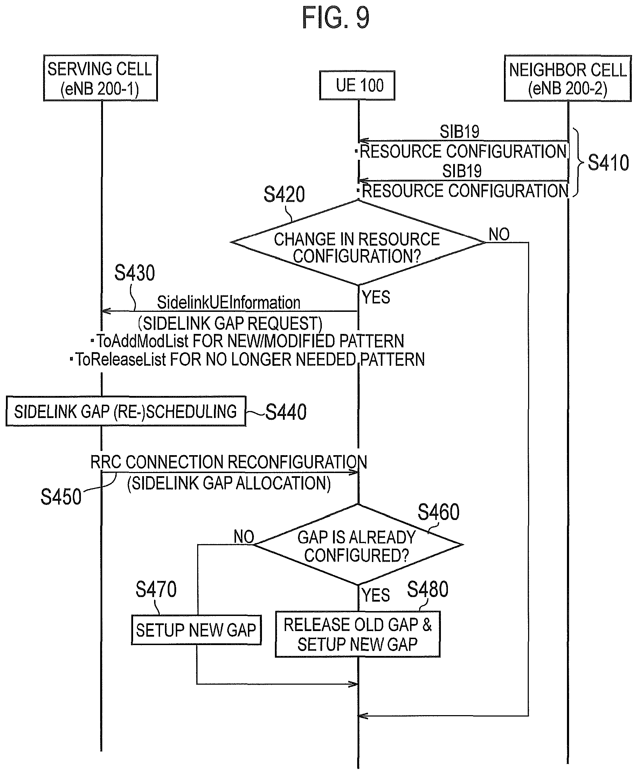

Next, an operation according to a fourth embodiment will be described by using Fig. 9. Fig. 9 is a sequence chart for describing the operation according to the fourth embodiment.

In the fourth embodiment, description will focus on a case where the UE 100 transmits, to the eNB 200-1 (serving cell) information which the UE 100 received from the neighbor cell. It is noted that the description of parts similar to at least any one of the first embodiment to the third embodiment will be omitted where appropriate.

In step S410, the neighbor cell (eNB 200-2) can transmit neighbor cell information including information (resource configuration) that can specify a duration in which the sidelink operation can be performed at a frequency to which the neighbor cell belongs. The eNB 200-2 can transmit the neighbor cell information by broadcast (for example, SIB (SIB19)). It is noted that the neighbor cell information may include restriction information related to an access restriction to a cell. The restriction information may be information indicating whether the access to the cell managed by the eNB 200-2 is restricted or the restriction is canceled.

The eNB 200-1 may periodically or non-periodically transmit the resource configuration (neighbor cell information). Step S410 may be operation similar to step S110.

In step S420, the UE 100 determines whether or not newly received neighbor cell information is different from the neighbor cell information received last time (Change in resource configuration?). For example, the UE 100 determines whether or not the resource configuration received from the neighbor cell has been changed. If the resource configuration is not changed, the UE 100 can end the process. That is, the UE 100 does not transmit, to the eNB 200-1, at least a part of the neighbor cell information. On the other hand, if the resource configuration is changed, the UE 100 executes a process (a process of step S430) of transmitting, to the eNB 200-1, at least a part of the neighbor cell information.

Further, the UE 100 may determine, based on a timer for determining whether or not to execute the process of step S430, whether or not to execute the process of step S430. For example, the UE 100 may perform the determination of step S420 only if the timer is operating. If the timer is expired, the UE 100 may constantly execute the process of step S430 without performing the determination of step S420. Further, if the timer is operating, the UE 100 may omit the process of step S430 without performing the determination of step S420. If the timer is expired, the UE 100 may perform the determination of step S420.

If receiving the neighbor cell information, the UE 100 may activate (start) the timer. If reporting (transmitting) the neighbor cell information (for example, the message for requesting the sidelink gap) to the eNB 200-1, the UE 100 may activate the timer.

The UE 100 may receive a threshold value (start value or expiration value (end value)) of the timer from the eNB 200-1. The eNB 200-1 may notify the UE 100 of the threshold value of the timer by common signaling (for example, broadcast by SIB and the like) and may notify the UE 100 of the threshold value of the timer (configure the threshold value of the timer for the UE 100) by dedicated signaling.

Further, (only) if the sidelink gap is already configured by the eNB 200-1, the UE 100 may execute the process of step S430. Further, if the restriction information has been changed, the UE 100 may execute the process of step S430. If the access to the cell is restricted and if the restriction of a cell in which the access has been restricted is canceled, the UE 100 executes the process of step S430.

Further, the UE 100 may execute the process of step S430 (only) if a cell (eNB) which transmits the neighbor cell information received this time and a cell (eNB) which transmits the neighbor cell information received last time are different. A case is assumed, as a result of movement of the UE 100, where cells which transmit the neighbor cell information are different. The UE 100 may execute the process of step S430 if the identifiers (such as a cell identifier and an eNB identifier) of cells which transmit the information, the identifiers being included in the neighbor cell information, are different.

Further, the UE 100 executes the process of step S430 if an interest in the sidelink operation (for example, including transmission/reception operation, frequency, and transmission and reception timing (period)) changes.

Step S430 to step S450 are operations similar to step S120 to step S140. It is noted that in step S430, the UE 100 may transmit, to the eNB 200-1, similarly to step S120, information of interest (for example, the predetermined period, the frequency, and the like). Further, the UE 100 may transmit, to the eNB 200-1, not only the information on the predetermined period that is a part of the neighbor cell information (or the resource configuration), but also the restriction information. The UE 100 may transmit, to the eNB 200-1, information modified from the information on the predetermined period received last time out of the newly received resource configuration as the information on the predetermined period. Further, in step S440, the eNB 200-1 may re-execute the scheduling of the sidelink gap (Sidelink Gap (re-)scheduling) even if the sidelink gap is configured for the UE 100 by executing the scheduling of the sidelink gap to the UE 100. Therefore, if receiving a message for requesting a new sidelink gap from the UE 100 for which the sidelink gap is configured, the eNB 200-1 may configure a new sidelink gap for the UE 100. The eNB 200-1 may cancel the configured sidelink gap, based on the received message.

In step S460, the UE 100 determines whether or not the sidelink gap is already configured (Gap is already configured?). If the sidelink gap is not configured, the UE 100 executes the configuration of the sidelink gap received from the eNB 200-1 (Setup new gap). On the other hand, if the sidelink gap is already configured, the UE 100 can release the configuration of the sidelink gap and execute the configuration of a new sidelink gap (Release old Gap Setup new gap).

Thus, if the neighbor cell information (resource configuration) received this time is different from the neighbor cell information (resource configuration) received last time, the UE 100 can transmit, to the eNB 200, at least a part of the neighbor cell information received this time. Therefore, the UE 100 need not transmit the same information over and over, and thus, it is possible to reduce signaling overhead to the eNB 200-1.

### [Other Embodiments]

The contents of the present application are described according to each of the above-described embodiments, but it should not be understood that the discussion and the drawings constituting a part of this disclosure limit to the contents of the present application. From this disclosure, various alternative embodiments, examples, and operational technologies will become apparent to those skilled in the art.

The operation according to each of the above-described embodiments may be combined to be executed, where necessary. Further, in each of the above-described sequences, all of the operations may not be necessarily essential. For example, in each sequence, only some of the operations may be executed. For example, the UE 100 may execute only a series of operations from step S450 to step S480 in the fourth embodiment.

Although not particularly mentioned in each of the above-described embodiments, a program for causing a computer to execute each process performed by any one of the above-described nodes (such as the UE 100 and the eNB 200) may be provided. Furthermore, the program may be recorded on a computer-readable medium. If the computer-readable medium is used, it is possible to install the program in a computer. Here, the computer-readable medium recording therein the program may be a non-transitory recording medium. The non-transitory recording medium may include, but not be limited to, a recording medium such as a CD-ROM and a DVD-ROM, for example.

Alternatively, a chip may be provided which is configured by: a memory for storing a program for performing each process performed by any one of the UE 100 and the eNB 200; and a processor) for executing the program stored in the memory.

### [Appendix]

### (1) Introduction

In this appendix, details of sidelink gaps are considered.

### (2) Definition of sidelink gap

### (2.1.1)

### Receiver/reception aspects

It should be natural that the definition of Rel-13 sidelink gaps should be aligned with the Rel-12 agreements. The UE is not required to decode any downlink signals in the subframes configured with discovery pools for discovery reception and one subframe preceding and following the subframes for RF re-tuning (i.e., guard period). It should be indicated by the sidelink gap as e.g., the bitmap pattern. It should be noted that the cellular measurement gaps subframes and the paging reception should be prioritized over the sidelink gap.

Proposal 1: The sidelink gap should indicate the subframes in which the UE is not required to read any downlink signals, except for the measurement gap and the paging message.

The intra-frequency measurements are not taken into account from the perspective of enhancements in Rel-13. Considering the existing measurement gap requirements, intra-frequency measurements should be prioritized over inter-frequency discovery reception. In other words, the sidelink gap may be interrupted by intra-frequency measurements.

Proposal 2: The inter-frequency discovery reception may be interrupted to fulfil the minimum performance for intra-frequency measurements.

If Proposal 1 is agreeable, the issues, "For RRC_CONNECTED UEs, 1 bit may be signalled using RRC signaling indicating whether this rule applies or not (on a per UE basis)", would be solved by the configuration of sidelink gap, instead of the "1 bit". Therefore, when the sidelink gap is not configured by the serving cell, the UE should follow the Rel-12 behaviour, i.e., ProSe reception does not affect Uu reception (e.g. UEs use DRX occasions in IDLE and CONNECTED to perform ProSe discovery reception or it uses a second RX chain if available).

Proposal 3: If the sidelink gap is not configured by the serving cell, the UE should follow the Rel-12 behaviour for discovery monitoring.

It should also be considered how the sidelink gap is configured and coexists with the other prioritized operations, i.e., the measurement gap, the paging occasion and intra-frequency measurement. Three options could be considered as follows;
Option 1: The serving cell only assigns the portion of the sidelink gap that doesn't overlap the inter-frequency measurement gap. Also the sidelink gap should not overlap the paging occasions and the intra-frequency measurements. With this option, no further prioritization needs to be defined under UE behaviour, although NW complexity will be increased, e.g., the complexity related to gap configuration may be increased.
Option 2: The serving cell refrains from assigning any sidelink gap when there is an overlap with the inter-frequency measurement gap. With this option, the inter-frequency measurement prioritization is not needed but the UE loses some opportunity to perform discovery reception. Also, the configuration is more complicated.
Option 3: The serving cell provides both inter-frequency measurement gap and sidelink gap independently without regards to possible overlap. It may be also independent from the paging occasions and the intra-frequency measurements. With this option, the prioritization needs to be defined, while actual overhead is minimized e.g., by configuration using simple bitmap/pattern.

Option 1 and 2 rely on NW implementation and the benefit is to avoid the standardization efforts in prioritization for coexistence of the other receiver activities. With Option 3 prioritization needs to be defined but the signalling overhead may be reduced. From the efficiency in practical network, Option 3 is slightly preferred. It's FFS whether to include PHICH reception in this prioritization rule.

Proposal 4: RAN2 should discuss whether a new prioritization rule needs to be defined for the UE to take into account of the possible overlap among the sidelink gap, the measurement gap, the paging occasion and/or the intra-frequency measurement opportunity.

### (2.1.2) Transmitter/transmission aspects

The discovery signals are transmitted in one or more occasions within the reception pools, i.e., the transmission occasions are subset of the reception pools. In the subframes indicated by the sidelink gap, the UE does not decode PDCCH and does not receive uplink grants accordingly. However, for the first 4 subframes in the sidelink gap, the uplink transmissions are still possible since the uplink grant may be received in 4 subframes preceding the sidelink gap; therefore the discovery announcements cannot be protected in the first 4 subframes. For the first 4 subframes of sidelink gap, the three alternatives could be considered;
Alt.1: The serving cell configures the sidelink gap with 4 subframes ahead of the actual period of discovery resources.
Alt.2: The UE is not required to receive uplink grants but still needs to read the other downlink signals in the 4 subframes preceding the sidelink gap.
Alt.3: The UE needs to prioritize uplink transmission even during the sidelink gap when the serving cell sends the uplink grant e.g., within the 4 subframes preceding the sidelink gap.

Although Alt.1 is a simple solution, the missed opportunities for the serving cell to send downlink transmission may not be acceptable. On the other hand, Alt.2 could solve the issues for the missed downlink transmission at the expense of increased standardization efforts. Alt.3 does not require any additional rule for the uplink grant, although the opportunity of discovery transmission may be reduced. If the serving cell wants to go with Alt.3, it can only decide not to configure the sidelink gap since Rel-12 behaviour is "The UE performs intra-frequency ProSe Direct Discovery announcement in subframes in which a ProSe Direct Discovery resource pool is configured. The ProSe Direct Discovery announcement shall not affect Uu transmission and/or reception". Considering "Gaps introduced for discovery transmitter and reception should apply to both inter-frequency and intra-frequency cases for connected mode UEs"[1] and "To enhance inter-carrier discovery performance for the non-dedicated transceiver case, gaps will be introduced to allow reusing an RF transmitter/receiver chain for direct discovery transmissions/receptions", it's slightly our preference to define the sidelink gap with Alt.2 which has different meaning from Rel-12 behaviour.

Proposal 5: If the sidelink gap is not configured by the serving cell, the UE should follow the Rel-12 behaviour for discovery transmission (i.e., Alt.3).

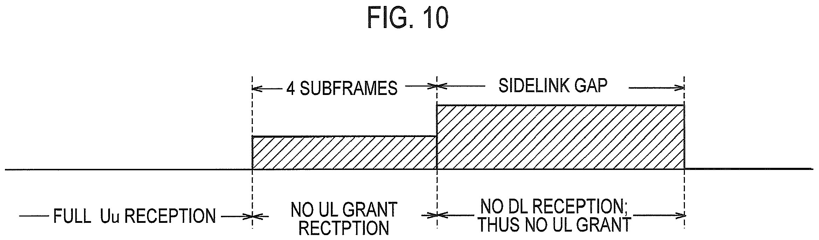

Proposal 6: The UE should not be required to receive uplink grants in the 4 subframes preceding the sidelink gap (i.e., Alt.2, see Fig. 10).

### (3) Configuration of sidelink gap

It's still unclear whether the sidelink gap is configure with single gap or separate gaps. With separate gaps, it may bring the differentiations with either Type 1 discovery or Type 2B discovery, either announcing or monitoring, and/or either per-frequency or per-PLMN. For simplicity and to reduce signalling overhead, the sidelink gap should be defined with a single "pattern" of subframes in which the UE is not required to read downlink signals as in Proposal 1:. It's similar to the existing specification for measurement gap, wherein "NOTE: The UE applies a single gap, which timing is relative to the MCG cells, even when configured with DC". It's up to UE implementation which frequency the UE performs discovery announcing/monitoring during the sidelink gap configured. It could also allow the network some degree of freedom for sidelink gap configuration, e.g., it's up to network implementation to adjust the balance between Uu services and discovery performance.

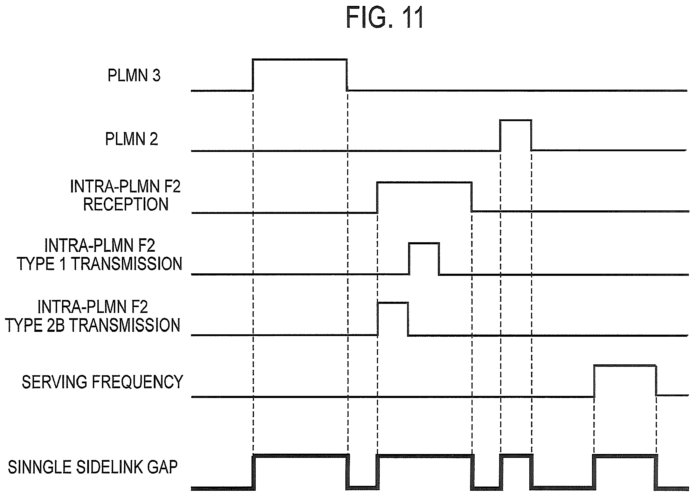

Proposal 7: The sidelink gap should be depicted by a single "pattern" of concerned subframes (See Fig. 11).

### (4) Request of sidelink gap

### (4.1) Contents in the request

It was agreed that "The UE can request gaps for discovery reception and/or transmissions. In the request the UE can inform the eNB of the subframes (corresponding of the timing of the serving cell) on which the UE needs gaps for transmission and/or reception", which facilitate the serving cell to determine appropriate sidelink gap for this UE, e.g., under the uncoordinated PLMN scenario. It's FFS on "what the transmissions subframes correspond to (all allowed transmission subframes or the subframes in which the UE intends to transmit)". With regards to the signalling overhead, it could be the same regardless of the definition of subframes informed, if the subframe is depicted by a bitmap pattern. Considering the serving cell has the responsibility of resource scheduling, the subframes information should be all allowed subframes. It allows the serving cell to decide appropriate gap pattern for the UE, taking into account e.g., QoS of Uu communication.

Proposal 8: The subframes informed in the sidelink gap request should be all allowed transmission and reception subframes, thus close the FFS.

In this sense, the subframes for transmission and reception should be informed separately in the request, i.e., one pattern for transmission subframes and other pattern for reception subframes.

In addition, the subframe patterns should be also separated for each frequency in which the UE is interested. So, each subframe pattern should be informed with the associated to "tags" such as Tx/Rx, frequency and/or PLMN ID.

Proposal 9: The UE should inform the serving cell of the separate subframe patterns including tags associated with transmission/reception, frequency and/or PLMN ID.

However, if the UE informs of such separate subframe patterns for every frequency, it will cause excessive signalling overhead. So, it's preferable to only allow the UE to inform the serving cell of the subframe patterns if the serving cell needs them. Therefore, it should be worth considering whether there is the condition to reduce the overhead.

In the scenario of intra-PLMN and coordinated inter-PLMN, the serving cell may already know the resource pool configurations (and possibly the timing offsets for SFN alignment) of neighbour eNBs belonging to the other frequencies. In this case, it could be considered that the UE only informs the serving cell of the frequencies of interest as the sidelink gap request, so that the serving cell could determine the sidelink gap for this UE. The frequency information could reuse the current agreement which is currently allowed only for public safety use case. Therefore, the agreement should be enhanced for commercial use case. In addition, the serving cell should provide the information for each frequency whether or not the UE should include the subframe patterns in the sidelink gap request.

Proposal 10: A UE in RRC_CONNECTED only indicates to the eNB the frequency in which direct discovery for commercial use case is desired, when the eNB has the knowledge of resource configuration on that frequency.

### (4.2) Trigger of the request

It's also FFS "when the request is triggered". When the UE is interested in discovery transmission, two scenarios on how the UE may initiate discovery transmissions are as follows;

### Scenario 1: The UE requests only the discovery resources and not the sidelink gap

For inter-frequency discovery transmission, it's performed when "the network can signal [...] the UE is expected to request resources from the serving cell for that carrier".

For intra-frequency discovery transmission, the scheduled resource allocation is performed as it is in Rel-12.

### Scenario 2: The UE autonomously obtain the discovery resources and also requests sidelink gap

For inter-frequency discovery transmission, it's performed when "the network can signal [...] the UE should autonomously read the SIB19 of the signaled carrier".

For intra-frequency discovery transmission, the UE autonomous resource selection is performed as it is in Rel-12.

In case of Scenario 1, it's obvious the eNB knows the sidelink gap for this UE since the eNB knows the transmission resources allocated to the UE. Although it's still unclear whether the sidelink gap is configured explicitly or implicitly, i.e., whether to configure the sidelink gap together with resource allocation, there is no need for the UE to send a sidelink gap request when the UE requests the dedicated transmission resources.

Proposal 11: When the UE requests the dedicated transmission resources to the serving cell, the sidelink gap request should not be triggered.

In case of Scenario 2, the eNB does not know whether the UE needs the sidelink gap since the UE autonomously obtains the transmission resources. So, the UE should be allowed to request the sidelink gap.

Proposal 12: When the UE autonomously obtain the transmission resources from SIB19, the UE should be allowed to request the sidelink gap if it needs.

It was proposed that the sidelink gap should be de-configured, e.g., when the UE is no longer interested in nor need the sidelink gap, in order to maximize the opportunity of Uu scheduling. Furthermore, the UE would notice the need to reconfigure the sidelink gap already configured due to change of some condition whereby e.g., the resource configuration is changed in SIB19 of other frequencies, the UE is not interested in inter-PLMN discovery but still interested in intra-PLMN, or the access restriction status is changed. So, the UE should also inform the serving cell when the condition is changed.

Proposal 13: To de-configure or reconfigure the sidelink gap, the UE should inform the serving cell of the information regarding change of e.g., UE's interest, transmission resource configuration and/or access restriction status on other carrier.

In the above-described embodiments, an LTE system is described as an example of the mobile communication system; however, the LTE system is not an exclusive example, and the content according to the present application may be applied to a system other than the LTE system.

## Claims

1. A communication method, comprising:
receiving, by a radio terminal (100), UE, from a base station (200-1), information used for determining whether to transmit information on a predetermined period for requesting a sidelink gap to the base station (200-1);
determining, by the radio terminal (100), whether to transmit the information on the predetermined period based on the information; and
transmitting, by the radio terminal (100) to the base station (200-1), a sidelink UE information message including the information on the predetermined period for requesting the sidelink gap, upon a determination to transmit the information on a predetermined period, wherein
the sidelink gap is a gap for transmitting or receiving a discovery message for discovering a proximal terminal at a frequency of a neighbor cell,
the information on the predetermined period is configured to identify a transmission period for transmitting the discovery message and a reception period for receiving the discovery message, and
the communication method further comprises:
receiving, by the radio terminal (100), configuration information for configuring the sidelink gap, from the base station (200-1), wherein
the configuration information is based on the information on the predetermined period.

2. The communication method according to claim 1, wherein the radio terminal (100) receives the information transmitted by broadcast from the base station (200-1).

3. The communication method according to claim 1, wherein the radio terminal (100) receives the information transmitted by unicast from the base station (200-1).

4. The communication method according to claim 1, wherein the information on the predetermined period is associated with the frequency.

5. The communication method according to claim 1, wherein the information on the predetermined period corresponds to a timing of a serving cell of the radio terminal (100).

6. A processor (130) in a radio terminal (100), UE, the processor configured to control the radio terminal (100), wherein
the processor (130) is configured to execute processes of:
receiving from a base station (200-1), information used for determining whether to transmit information on a predetermined period for requesting a sidelink gap to the base station (200-1);
determining whether to transmit the information on the predetermined period based on the information; and
upon a determination to transmit the information on the predetermined period, transmitting a sidelink UE information message including the information on the predetermined period for requesting the sidelink gap to the base station (200-1), wherein
the sidelink gap is a gap for transmitting or receiving a discovery message for discovering a proximal terminal at a frequency of a neighbor cell,
the information on the predetermined period is configured to identify a transmission period for transmitting the discovery message and a reception period for receiving the discovery message, and
the processor (130) is further configured to execute a process of:
receiving configuration information for configuring the sidelink gap, from the base station (200-1), wherein
the configuration information is based on the information on the predetermined period.

7. A processor (230) in a base station (200), the processor is configured to control the base station, wherein the processor (230) is configured to execute processes of:
transmitting to a radio terminal (100), UE, information used for determining whether to transmit information on a predetermined period for requesting a sidelink gap to the base station; and
receiving a sidelink UE information message including the information on the predetermined period for requesting the sidelink gap from the radio terminal (100), wherein
the sidelink gap is a gap for transmitting or receiving a discovery message for discovering a proximal terminal at a frequency of a neighbor cell,
the information on the predetermined period is configured to identify a transmission period for transmitting the discovery message and a reception period for receiving the discovery message, and
the processor (230) is further configured to execute a process of transmitting, in response to the request for the sidelink gap, configuration information for configuring the sidelink gap for the radio terminal, to the radio terminal (100), the configuration information being based on the information on the predetermined period.

8. A radio terminal (100) comprising a processor (130) according to claim 6.

9. A base station (200) comprising a processor (230) according to claim 7.

## Patentansprüche

1. Kommunikationsverfahren, welches umfasst:
Empfangen von Informationen durch ein Funkendgerät (100), UE, von einer Basisstation (200-1), die verwendet werden, um zu bestimmen, ob Informationen zu einem vorbestimmten Zeitraum zum Anfordern einer Sidelink-Lücke zur Basisstation (200-1) gesendet werden sollen;
Bestimmen durch das Funkendgerät (100), ob die Informationen zu dem vorbestimmten Zeitraum basierend auf den Informationen übertragen werden sollen; und
Übertragen, durch das Funkendgerät (100) an die Basisstation (200-1), einer Sidelink-UE-Informationsnachricht, die die Informationen über den vorbestimmten Zeitraum zum Anfordern der Sidelink-Lücke enthält, nachdem bestimmt worden ist, die Informationen über einen vorbestimmten Zeitraum zu übertragen, wobei
die Sidelink-Lücke eine Lücke zum Senden oder Empfangen einer Erkennungsnachricht zum Erkennen eines proximalen Endgeräts bei einer Frequenz einer Nachbarzelle ist,
die Informationen über den vorbestimmten Zeitraum konfiguriert sind, um einen Übertragungszeitraum zum Senden der Erkennungsnachricht und einen Empfangszeitraum zum Empfangen der Erkennungsnachricht zu identifizieren, und
das Kommunikationsverfahren ferner umfasst:
Empfangen, durch das Funkendgerät (100) von der Basisstation (200-1), von Konfigurationsinformationen zum Konfigurieren der Sidelink-Lücke, wobei
die Konfigurationsinformationen auf den Informationen über den vorbestimmten Zeitraum basieren.

2. Kommunikationsverfahren nach Anspruch 1, wobei
das Funkendgerät (100) die durch Senden von der Basisstation (200-1) übertragenen Informationen empfängt.

3. Kommunikationsverfahren nach Anspruch 1, wobei das Funkendgerät (100) die durch Unicast übertragenen Informationen von der Basisstation (200-1) empfängt.

4. Kommunikationsverfahren nach Anspruch 1, wobei die Informationen zu dem vorbestimmten Zeitraum der Frequenz zugeordnet sind.

5. Kommunikationsverfahren nach Anspruch 1, wobei die Informationen zu dem vorbestimmten Zeitraum einem Timing einer aktiven Zelle des Funkendgeräts (100) entsprechen.

6. Prozessor (130) in einem Funkendgerät (100), UE, wobei der Prozessor konfiguriert ist, um das Funkendgerät (100) zu steuern, wobei
der Prozessor (130) konfiguriert ist, um die folgenden Prozesse auszuführen:
Empfangen von Informationen von einer Basisstation (200-1), die verwendet werden, um zu bestimmen, ob Informationen zu einem vorbestimmten Zeitraum zum Anfordern einer Sidelink-Lücke zur Basisstation (200-1) gesendet werden sollen;
Bestimmen, ob die Informationen zu dem vorbestimmten Zeitraum basierend auf den Informationen übertragen werden sollen; und
nach einer Bestimmung, die Informationen zu dem vorbestimmten Zeitraum zu übertragen, Senden einer Sidelink-UE-Informationsnachricht, die die Informationen zu dem vorbestimmten Zeitraum zum Anfordern einer Sidelink-Lücke enthält, an die Basisstation (200-1), wobei
die Sidelink-Lücke eine Lücke zum Senden oder Empfangen einer Erkennungsnachricht zum Erkennen eines proximalen Endgeräts mit einer Frequenz einer Nachbarzelle ist,
die Informationen über den vorbestimmte Zeitraum konfiguriert sind, um einen Übertragungszeitraum zum Senden der Erkennungsnachricht und einen Empfangszeitraum zum Empfangen der Erkennungsnachricht zu identifizieren, und
der Prozessor (130) ferner konfiguriert ist, um einen Prozess wie folgt auszuführen:
Empfangen von Konfigurationsinformationen zum Konfigurieren der Sidelink-Lücke, von der Basisstation (200-1), wobei
die Konfigurationsinformationen auf den Informationen über den vorbestimmten Zeitraum basieren.

7. Prozessor (230) in einer Basisstation (200), wobei der Prozessor konfiguriert ist, um die Basisstation zu steuern, wobei
der Prozessor (230) konfiguriert ist, um die folgenden Prozesse auszuführen:
Senden von Informationen, die zum Bestimmen verwendet werden, ob Informationen zu einem vorbestimmten Zeitraum zum Anfordern einer Sidelink-Lücke zur Basisstation gesendet werden sollen, an ein Funkendgerät (100), UE; und
Empfangen einer Sidelink-UE-Informationsnachricht mit den Informationen über den vorbestimmte Zeitraum zum Anfordern einer Sidelink-Lücke, von dem Funkendgerät (100), wobei
die Sidelink-Lücke eine Lücke zum Senden oder Empfangen einer Erkennungsnachricht zum Erkennen eines proximalen Endgeräts mit einer Frequenz einer Nachbarzelle ist,
die Informationen über den vorbestimmten Zeitraum konfiguriert sind, um einen Sendezeitraum zum Senden der Erkennungsnachricht und einen Empfangszeitraum zum Empfangen der Erkennungsnachricht zu identifizieren, und
der Prozessor (230) ferner konfiguriert ist, um als Reaktion auf die Anforderung der Sidelink-Lücke, Konfigurationsinformationen zum Konfigurieren der Sidelink-Lücke für das Funkendgerät an das Funkendgerät (100) zu senden, wobei die Konfigurationsinformationen auf den Informationen zu dem vorbestimmten Zeitraum basieren.

8. Funkendgerät (100) mit einem Prozessor (130) nach Anspruch 6.

9. Basisstation (200) mit einem Prozessor (230) nach Anspruch 7.

## Revendications

1. Procédé de communication, comprenant :
la réception, par un terminal radio (100), UE, à partir d'une station de base (200-1), d'informations utilisées pour déterminer s'il faut ou non transmettre des informations sur une période prédéterminée pour demander un intervalle de liaison latérale à la station de base (200-1) ;
la détermination, par le terminal radio (100), s'il faut ou non transmettre les informations sur la période prédéterminée sur la base des informations ; et
la transmission, par le terminal radio (100), à la station de base (200-1), d'un message d'informations d'UE de liaison latérale incluant les informations sur la période prédéterminée pour demander l'intervalle de liaison latérale, lors d'une détermination de transmettre les informations sur une période prédéterminée, dans lequel
l'intervalle de liaison latérale est un intervalle pour transmettre ou recevoir un message de découverte pour découvrir un terminal proximal, à une fréquence d'une cellule voisine,
les informations sur la période prédéterminée sont configurées pour identifier une période de transmission pour transmettre le message de découverte et une période de réception pour recevoir le message de découverte, et
le procédé de communication comprend en outre :
la réception, par le terminal radio (100), d'informations de configuration pour configurer l'intervalle de liaison latérale, à partir de la station de base (200-1), dans lequel
les informations de configuration sont sur la base des informations sur la période prédéterminée.

2. Procédé de communication selon la revendication 1, dans lequel
le terminal radio (100) reçoit les informations transmises par diffusion générale à partir de la station de base (200-1).

3. Procédé de communication selon la revendication 1, dans lequel le terminal radio (100) reçoit les informations transmises par diffusion individuelle à partir de la station de base (200-1).

4. Procédé de communication selon la revendication 1, dans lequel les informations sur la période prédéterminée sont associées à la fréquence.

5. Procédé de communication selon la revendication 1, dans lequel les informations sur la période prédéterminée correspondent à une synchronisation d'une cellule de desserte du terminal radio (100).

6. Processeur (130) dans un terminal radio (100), UE, le processeur étant configuré pour commander le terminal radio (100), dans lequel
le processeur (130) est configuré pour exécuter des processus de :
la réception, à partir d'une station de base (200-1), d'informations utilisées pour déterminer s'il faut ou non transmettre des informations sur une période prédéterminée pour demander un intervalle de liaison latérale à la station de base (200-1) ;
la détermination s'il faut ou non transmettre les informations sur la période prédéterminée sur la base des informations ; et
lors d'une détermination de transmettre les informations sur la période prédéterminée, la transmission d'un message d'informations d'UE de liaison latérale incluant les informations sur la période prédéterminée pour demander l'intervalle de liaison latérale à la station de base (200-1), dans lequel
l'intervalle de liaison latérale est un intervalle pour transmettre ou recevoir un message de découverte pour découvrir un terminal proximal, à une fréquence d'une cellule voisine,
les informations sur la période prédéterminée sont configurées pour identifier une période de transmission pour transmettre le message de découverte et une période de réception pour recevoir le message de découverte, et
le processeur (130) est en outre configuré pour exécuter un processus de :
la réception d'informations de configuration pour configurer l'intervalle de liaison latérale, à partir de la station de base (200-1), dans lequel
les informations de configuration sont sur la base des informations sur la période prédéterminée.

7. Processeur (230) dans une station de base (200), le processeur est configuré pour commander la station de base, dans lequel
le processeur (230) est configuré pour exécuter des processus de :
la transmission, à un terminal radio (100), UE, d'informations utilisées pour déterminer s'il faut ou non transmettre des informations sur une période prédéterminée pour demander un intervalle de liaison latérale à la station de base ; et
la réception d'un message d'informations d'UE de liaison latérale, incluant les informations sur la période prédéterminée pour demander l'intervalle de liaison latérale, à partir du terminal radio (100), dans lequel
l'intervalle de liaison latérale est un intervalle pour transmettre ou recevoir un message de découverte pour découvrir un terminal proximal, à une fréquence d'une cellule voisine,
les informations sur la période prédéterminée sont configurées pour identifier une période de transmission pour transmettre le message de découverte et une période de réception pour recevoir le message, et
le processeur (230) est en outre configuré pour exécuter un processus de la transmission, en réponse à la demande concernant l'intervalle de liaison latérale, d'informations de configuration pour configurer l'intervalle de liaison latérale pour le terminal radio, au terminal radio (100), les informations de configuration étant sur la base des informations sur la période prédéterminée.

8. Terminal radio (100), comprenant un processeur (130) selon la revendication 6.

9. Station de base (200), comprenant un processeur (230) selon la revendication 7.
